(19) Europäisches Patentamt / European Patent Office / Office européen des brevets

(11) **EP 3 260 243 B1**

(12) **EUROPEAN PATENT SPECIFICATION**

(45) Date of publication and mention
of the grant of the patent:
**02.06.2021 Bulletin 2021/22**

(21) Application number: **16176016.0**

(22) Date of filing: **23.06.2016**

(51) Int Cl.:
**B25J 9/16** *(2006.01)*     **E04F 21/20** *(2006.01)*

(54) **METHOD AND SYSTEM FOR PLACING AT LEAST ONE OBJECT ON A SURFACE**

VERFAHREN UND SYSTEM ZUR PLATZIERUNG VON MINDESTENS EINEM OBJEKT AUF EINER OBERFLÄCHE

PROCÉDÉ ET SYSTÈME DE MISE EN PLACE D'AU MOINS UN OBJET SUR UNE SURFACE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.12.2017 Bulletin 2017/52**

(73) Proprietor: **El-Zouki Group AB**
**126 39 Hägersten (SE)**

(72) Inventors:
• **Moe, Anders**
**583 30 Linköping (SE)**
• **Johansson, Björn**
**583 30 Linköping (SE)**

(74) Representative: **Ström & Gulliksson AB**
**Box 5275**
**102 46 Stockholm (SE)**

(56) References cited:
**WO-A1-2015/193883     FR-A1- 2 919 322**

• **J P R Jongeneel ET AL: "Robotic tiling of rough floors: A design study", , 20 December 2010 (2010-12-20), XP055125288, Retrieved from the Internet: URL:http://www.mate.tue.nl/mate/pdfs/12170 .p df [retrieved on 2014-06-26]**

**Description**

Technical field

The present invention generally relates to the field of placing one or more objects on a surface, especially objects for covering floors, walls, ceilings or the like where precise positioning is desired. The invention relates to a method and system for placing at least one object such as a tile, brick, roof panel, wall panel etc on a surface.

Background of the invention

When positioning objects for constructional purposes such as laying floors, building walls, covering walls, roofs or ceilings and so on, it is desired to obtain high accuracy in positioning the objects in order to achieve a satisfying end result. Generally, tiles and the like are installed one by one and by a craftsman positioning and aligning one object after the other. However, the work performed may be tiring, heavy and time consuming. Therefore, a machine, robot or the like may be used for performing such cumbersome work.

Accurate positioning of every object when using machines, robots etc. for placing objects needs to be ensured since small errors may result in large drift when working on large areas. For positioning objects with very high accuracy, advanced measuring systems may have to be used which can be complicated and time consuming to install, as well as expensive and sensitive to damages etc.

US 2015/0336272 A1 discloses a machine for aligning items in a pattern and a method of using the machine. The machine includes an effector for positioning the items as well as several edge and height sensors. The sensors are used for positioning a new item such as a tile in x, y and z directions relative to a first and second laid tile.

EP 2907938 A1 describes an apparatus and method for placing a tile on a floor. The apparatus includes a measuring device configured to measure the position of a tile to be placed on the floor relative to the ones which are already put in place. J P R Jongeneel ET AL: "Robotic tiling of rough floors: A design study", 20 December 2010, FR 2919322 A1, and WO 2015/193883 A1 disclose other automatic and manual methods for placing and aligning tiles.

However, placing an object depending only on the position of previously positioned objects may give rise to initially small inaccuracies which will accumulate and thus grow larger for each placed object.

Therefore, there is a need for an improved method for placing objects overcoming the above mentioned problems.

Summary

It would be advantageous to achieve a method overcoming, or at least alleviating, the above mentioned drawbacks. In particular, it would be desirable to enable high precision positioning of objects such as tiles, bricks, panels or the like when using a machine for placing the objects on a surface.

To better address one or more of these concerns, a method and system having the features defined in the independent claims are provided. Preferable embodiments are defined in the dependent claims.

Hence, according to a first aspect, a method for placing at least one object on a surface is provided, the object being carried and positioned by a tool. The method comprises determining a deviation in at least one dimension between a line of sight between a first and a second object placed on the surface and an optical line directed from the first towards the second object, determining a position in at least one dimension for the tool based on the determined deviation, and positioning the tool so that the position is achieved, thereby placing the object on the surface.

By determining the deviation between the line of sight and the optical line, and compensating for that deviation when determining the position for the tool, there is no need for the optical line being exactly aligned with the two objects on the surface. It is enough for the optical line to start in the vicinity of the first object, and to be directed towards the vicinity of the second object. The deviation may be determined in at least one dimension, preferably two dimensions. It is apparent that other methods may be used along with the above method for positioning the tool in the remaining dimension/s.

The tool may be comprised in a machine, robot or the like for placing objects on a surface such as a floor, wall, roof, ceiling etc. Objects to be placed may for example be tiles, panels, bricks, slabs or paving-stones.

The steps in the method may be performed sequentially or there may be additional steps in between them such as storage of data, sending data to remote units, receiving input from a user etc.

Determining the deviation may be performed once for every row of objects to be placed. The determination of the position of the tool may be performed for each new object to be placed on the surface.

The first and second objects on the surface may have been placed there by a person, such as a craftsman, and put into their correct position by any appropriate method. Alternatively, the first and second object is placed and accurately positioned on the surface by some automated process.

Preferably, the first and second objects represent the end objects of one row of objects to be laid. Every object inbetween the first and second object is hence placed in its position on the surface by the tool.

The method may be used for determining the position for the tool in a direction perpendicular to the surface as well as a direction parallel to the surface.

The step of determining the deviation comprises determining a distance between the first and second objects along the line of sight, generating an optical line, determining a distance from at least an edge or a surface of the first object to the optical line, and determining a distance from at least a corresponding edge or a corresponding surface of the second object to the optical line, determining a distance, along the line of sight, from the first object to a position where the object carried by the tool is to be placed, and determining the position for the tool based at least on the distance between the first and second objects along the line of sight, the distance from at least an edge or a surface of the first object to the optical line, the distance from at least a corresponding edge or a corresponding surface of the second object to the optical line and the distance from the first object to the object to be placed.

The deviation between the optical line and the line of sight may be determined in at least one dimension. The distance between the optical source and the surface or edge of the first object is taken into account as well as the distance between the corresponding surface or edge of the second object and the optical line. The distance between the optical source and the surface or edge of the first object is determined in a plane substantially parallell and/or substantially orthogonal to the line of sight. The distance to determine ranges from an edge or surface of the second object to a point of impact from the projected optical line in a plane substantially parallell and/or substantially orthogonal to the line of sight. By substantially is meant that the plane may differ from being exactly orthogonal/parallel by less than 10 %, preferably less than 5 %, most preferably less than 1 %. The difference due to how the optical sensor is placed.

Determining the distance between the first and second objects along the line of sight may be performed in a number of ways for example by using an appropriate distance meter or range finder. It may be performed by using laser equipment for measuring distances. Additionally, the initial distance to be covered by objects may be measured in any appropriate manner, the initial distance may be stored, and for every object being placed the length of the object may be subtracted from the initial distance to obtain the distance between the first and second object, and later on also to determine the distance between the first object and an additional object recently being placed on the surface.

The distance from the first object to the optical line may be determined by any appropriate method. For example, the distance from a top surface of the object to an optical source generating the optical line may be measured automatically or manually. Correspondingly, the distance from an edge of the object to the optical source may be measured.

Before the step of determining the distance from at least a corresponding edge or a corresponding surface of the second object to the optical line, a first optical sensor may be calibrated by obtaining output from the first optical sensor when placed intersecting the optical line within a predetermined distance from an optical source emitting the optical line. Further, an object being carried by the tool may during calibration be aligned to the first object on the surface, and a distance may be determined between at least a part of the tool and an edge of the object being carried by the tool during calibration.

The object being carried by the tool during calibration may be the same object as the object to be placed on the surface. Alternatively, the object to be placed may be a different object from the one during calibration process. Preferably, calibration is performed once, with an initial object to be placed on the surface. The following objects are placed without the need for calibration, since it has already been performed once.

A distance may be determined between the at least part of the tool and an edge of the object to be placed, and the step of determining the position of the tool may be based also on the distance between at least a part of the tool and an edge of an object during calibration, and the distance between the at least part of the tool and an edge of the object to be placed.

Determining the distance from at least a corresponding edge or a corresponding surface of the second object to the optical line, may be based on output from the first optical sensor or from a second optical sensor analogously calibrated as the first optical sensor.

According to a second aspect a system for placing at least one object on a surface is provided. The system comprises a tool for carrying and placing the object, a measuring device adapted to determine distances between objects placed on the surface, at least one position sensing unit, comprising an optical source and a first optical sensor, a processing device adapted for receiving input from the position sensing unit and the measuring device, and based on the received input determine a position in at least one dimension for the tool, and a control unit adapted for communicating with the processing device and to control the tool, based on signals received from the processing device, to obtain the position of the tool for placing the object on the surface.

The position sensing unit may further comprise a second optical sensor. The first and/or the second optical sensors may be calibrated optical sensors.

The position sensing unit may further comprise a local deviation position sensing device for sensing position deviation in at least one dimension between an object carried by the tool and an object already present on the surface. The local deviation position sensing device may for example be a camera, laser line, laser grid, laser distance or the like for sensing edges of the objects or a combination of such devices. It may also comprise additional units such as a processor or storage unit for processing and storing data.

The first optical sensor may be comprised in the tool and the optical source may be placed on the top surface of a first object on the surface.

The optical source may be adapted for emitting an optical line from the first object towards a second object on the surface and the first optical sensor may be adapted for receiving the optical line.

Brief description of the drawings

This and other aspects will now be described in more detail in the following illustrative and non-limiting detailed description of embodiments, with reference to the appended drawings.

Figure 1 is a schematic representation of a method for placing objects according to the invention.
Figure 2 is a schematic representation of a system for placing objects according to the invention.
Figure 3 shows an illustration of a plurality of objects placed on a surface.
Figure 4A and 4B illustrates a first and a second object placed on a surface.
Figure 5A and 5B are additional illustrations of the first and second object depicted in Figure 4A and 4B.
Figure 6A and 6B shows a schematic representation of a placing an object on a surface.
Figure 7A and 7B schematically illustrates an optical source placed on an object.
Figure 8 schematically illustrates a part of a calibration process.
Figure 9 schematically illustrates two alternatives of determining a distance, Z1.
Figure 10A and 10B shows a representation of distances, D0 and D, between at least a part of a tool and an edge of an object.

Detailed description of embodiments

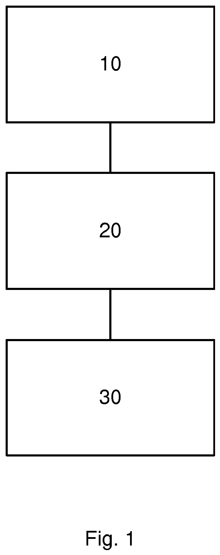

A method for placing at least one object on a surface according to the invention will be described with reference to Figure 1. The method comprises the following steps:

10: Determining a deviation in at least one dimension between a line of sight, YL, between a first, O0, and a second, O1, object placed on the surface SF and an optical line L directed from the first, O0, towards the second, O1, object.
20: Determining a position Xn, Zn in at least one dimension for the tool, 101, based on the determined deviation.
30: Positioning the tool, 101, so that the position Xn, Zn is achieved, thereby placing the object, On, on the surface, SF.

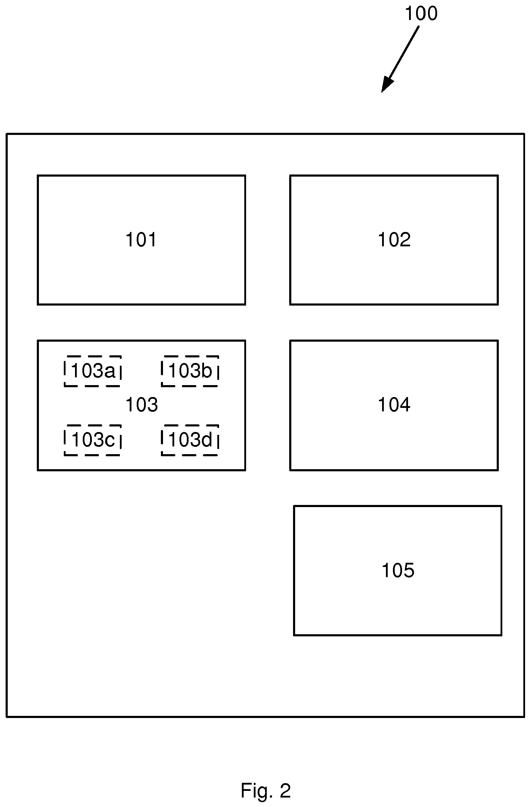

A system 100 for placing at least one object on a surface according to an embodiment is disclosed in Figure 2. The system comprises a tool 101, a measuring device 102, at least one position sensing unit 103 comprising an optical source 103a and a first optical sensor 103b. The position sensing unit may further comprise a second optical sensor 103c and a local deviation position sensing device 103d. The system further comprises a processing device 104 and a control unit 105.

The tool 101 is adapted to carry and place an object such as a tile, brick, panel and the like on a surface. It may be any conventional tool for holding and placing objects. It may also be able to pick up the object from a stack of objects. The tool may be comprised in a robot or machine for placing objects. Additionally, the tool may comprise means for forcing the object towards the surface and means for releasing the object when placed in an accurate position. The tool may be attached to any appropriate means such as a robot arm or attachment means within a machine assembly. The tool may pick up, carry and release an object for example by using mechanical engaging means or engaging means using air force by creating vacuum for holding the object. The tool may be able to position the object in a at least three dimensions x, y and z directions. Preferably, it may position the object in six dimensions: x, y, z, rotation around z and tilt in x and y directions.

The tool may be connected to the processing unit 104 and/or the control unit 105 for sending and receiving signals therefrom.

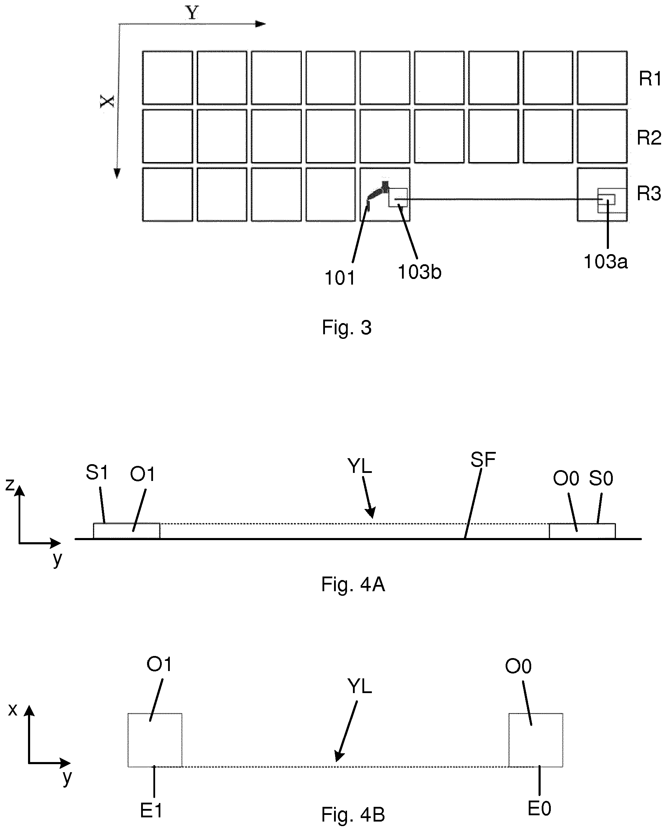

The measuring device 102 is able to determine distances between objects on the surface. The measuring device may be a separate stand-alone device or may be comprised in or attached to for example the tool or the position sensing unit or in another. It may also be comprised in or attached to a robot or machine for placing objects on the surface. The measuring device may be any conventional device for measuring distances between objects. It may be a device being read by a user, and/or a device sending measurement data to a remote unit such as the processing device 104 and/or control unit 105. By way of example, the measuring device is an optical device determining distances by using a projected laser line or laser grid. Distances may be determined by the measuring device in at least one dimension. The measuring device may measure a distance y1 between a first and a second object placed on the surface, which is described in more detail in relation to Figures 3-10 below.

The at least one position sensing unit 103 is adapted to sense positions in at least one dimension, preferably in two dimensions namely z, which is perpendicular to the surface as well as x, parallel to the surface. If a row of objects is to be placed on the surface, the x-direction is parallel to the surface and perpendicular to the row, the y-direction is parallel to the surface and directed along the row and the z-direction is perpendicular to the surface and hence to the x and y directions (see also Figures 3 and 4).

The position sensing unit comprises an optical source 103a for emitting an optical line L such as a laser line, laser cross, laser beam or dot laser. The source may be any conventional optical source appropriate for projecting a line between two spaced apart objects on a surface. Additionally, the optical line may be collimated ensuring a relatively constant optical line diameter also over long distances. The optical line may be manually directed from the first towards the second object. Alternatively or additionally, the optical source may be self-leveling.

Further comprised by the position sensing unit is a first optical sensor 103b adapted to receive the optical line emitted by the source 103a and to generate output regarding the properties of the received optical signals. Preferably, the first optical sensor is able to detect the position where it is intersected by an optical line such as a laser line. By way of example, the optical sensor comprises a surface, which when receiving optic signals generates output concerning the position on the sensitive surface being hit by the optic signal, in this case an optical line such as laser line. The position where the line is intersecting the surface may be determined by having a camera directed towards the surface and by calculating the position of the intersection from at least one image generated by the camera. In this case, the position of camera in relation to the surface may be constant or if not, image processing may be used for finding and determining the position of the intersection. The surface may be of any shape, such as squared, circular, rectangular and so on depending on the circumstances.

Preferably, at least a part of the first optical sensor 103b is attached to the tool 101 or at least attached in the vicinity of the tool so that it is moved along with the tool. For example, it may be attached to a part of the tool engaging an object to be placed. The first optical sensor may be a single sensor or comprise several cooperating sensing units.

The position sensing unit 103 may further comprise a second optical sensor 103c which may be used in addition to the first optical sensor 103b. The second optical sensor may be constructed in a corresponding manner as the first optical sensor as described above. However, the second optical sensor may be a stand-alone unit which is not mounted on or in connection to the tool 101.

The position sensing unit 103 may further comprise local deviation position sensing device 103d for sensing position deviation in at least one dimension within a limited space. The local deviation position sensing device may be adapted to sense the position of at least one object or at least a part of an object. It may for example be a camera, laser line, laser grid or the like for sensing objects. It may be positioned on or in connection to the tool 101 so that it is moved along with the tool. Alternatively, it may be a stand-alone unit sensing objects from a distance. Preferably, it is positioned in the vicinity of the tool so that it is able to sense a position deviation in at least one dimension between an object carried by the tool and an object already present on the surface. It may be for example be placed on a part of the tool or on a device engaging the tool such as a robot arm or the like.

The local deviation position sensing device 103d may be able to detect corresponding edges or surfaces of two objects and thereby a differing distance may be calculated. It may not take into account the global position, for example not determine the absolute position of an object in the space, but instead compare two objects within a local space.

The position sensing unit 103 may be connected to the processing device 104 and/or the control unit 105, thereby being able to send and receive signals to and from the processing device and/or control unit.

The processing device 104 may process signals from the other devices and units within the system 100 as well as from remote units not comprised in the system 100. It may comprise a single processing unit or several interconnected cooperating processing units. The processing device may be integrated in any appropriate device such as in a stand-alone device or within a machine or robot comprising the tool 101.

The control unit 105 may receive signals from the processing device 104 and is adapted to generate signals for controlling the devices and units within the system 100 and additionally other devices outside the system. It may generate and send position signals to the tool, which makes the tool move and arrive at a position indicated by the received signals. The control unit may comprise a single control unit or several interconnected cooperating control units.

Signals within the system 100, as well as signals being sent to and from devices and units to remote units, may be sent by wire or wirelessly depending on the circumstances.

In Figure 3 a number of objects are placed in three rows R1-R3 on a surface (not shown). The objects are seen in a perspective from above looking down on the objects placed on the surface in a direction perpendicular to the surface. Note that the tool 101 is seen in a perspective from the side contrary to the objects on the surface. Two of the rows R1, R2 are completed and the third row R3 is ongoing. As indicated, a first row R1 extends in the y-direction and following rows R2, R3 are placed side by side in the x-direction. A tool 101 is used for carrying and placing objects on the surface. An optical source 103a is placed on the first object of the third row R3 directing an optical line towards the object carried by the tool 101 comprising a first optical sensor 103b.

A first object O0 and a second object O1 are shown in Figure 4. The objects are placed on a surface SF and Figure 4A shows the objects O0, O1 as seen from the side from a point of view parallel with the surface, while in Figure 4B the two objects O0, O1 are seen from above in a direction perpendicular to the surface SF (not shown in 4B), hence looking down on the two objects placed on the surface SF.

A line of sight YL extends between the two objects O0, O1. As seen in Figure 4A the line of sight YL extends between the top surface S0 of the first object O0 to the corresponding top surface S1 of the second object O1. As seen in Figure 4B the line of sight YL extends between an edge E0 of the first object O0 to the corresponding edge E1 of the second object O1. This is an example, and a line of sight may extend from any of the surfaces or edges of the first object O0 to any corresponding surface or edge of the second object O1.

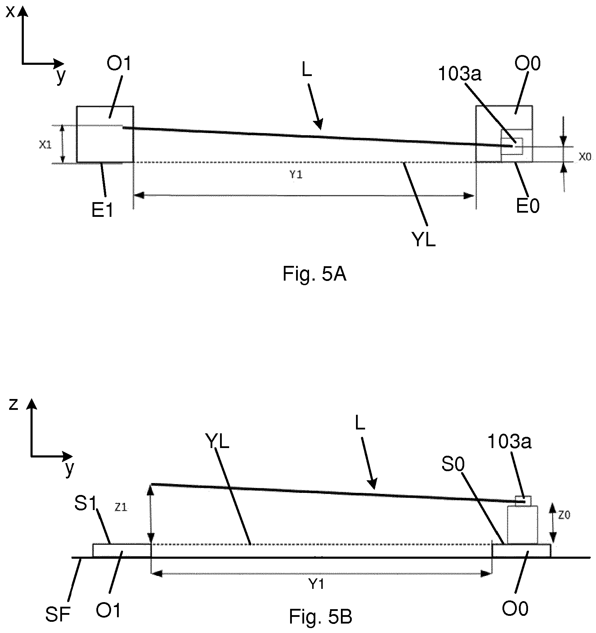

Figure 5A and 5B also depicts the first O0 and second O1 objects on a surface SF. The objects O0, O1 are spaced apart by a distance Y1. An optical source 103 a is placed on the first object O0 and an optical line L is emitted from the source 103a at a distance X0 from the edge E0 in the x-direction, and at a distance Z0 in the z-direction from the top surface S0. The emitted optical line L reaches the second object O1 at a point situated a distance X1 in the x-direction from the edge E1 of the second object, and a distance Z1 in the z-direction from the top surface S1 of the second object O1. The offset from the distance between the first and second objects Y1 to the point where the optical line reaches the second object X1, Z1 may be known. For example, it may be determined where, in the x and z dimensions, on the second object a sensor for detecting the optical line is positioned. This may be determined in any appropriate way. The offset may be negligible or it may be compensated for when determining distances X1 and Z1.

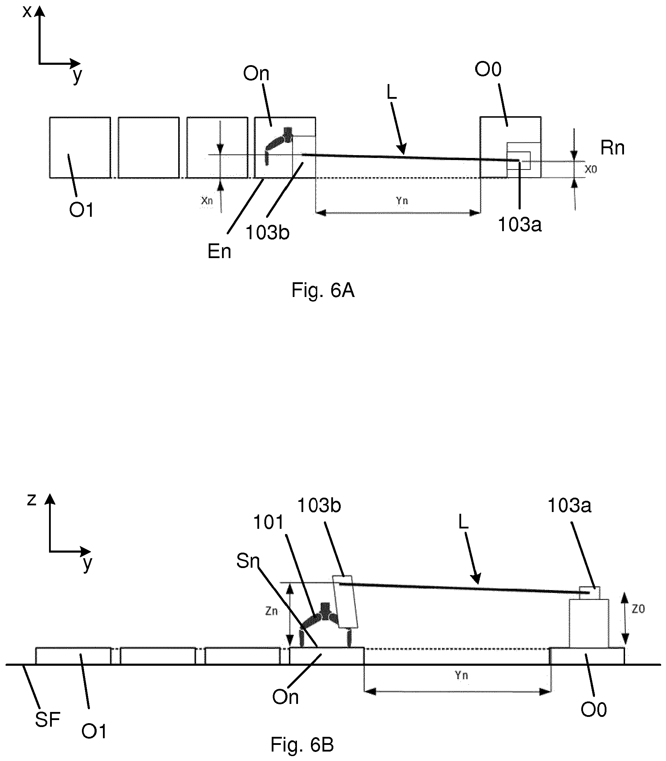

A row Rn of objects O0, O1, ..., On is depicted in Figure 6A and 6B. Note that the tool 101 is seen in a perspective from the side both in Figure 6A and 6B contrary to the objects in 6A being seen from above, looking down on the surface. An object On to be placed is carried by a tool 101, the tool comprising a first optical sensor 103b. A optical source 103a is placed on the first object O0 on the surface SF. An optical line L is emitted from the first object O0 towards the object On to be placed. The first object O0 and the object to be placed On is separated by a distance Yn in the y-direction. As previously disclosed in relation to Figure 5, the optical line L is emitted from the optical source 103a at a point expressed by distances X0 and Z0 from the first object O0. The optical line is emitted towards a point distanced from the object On to be placed in the x-direction by a distance Xn, and in the z-direction by a distance Zn from the edge En and the top surface Sn respectively. The offset from Yn to the point where the optical line reaches the an object On to be placed Xn, Zn may be known. For example, it may be determined where, in the x and z dimensions, on the object On a sensor for detecting the optical line is positioned. This may be determined in any appropriate way. The offset may be negligible or it may be compensated for when determining distances Xn and Zn.

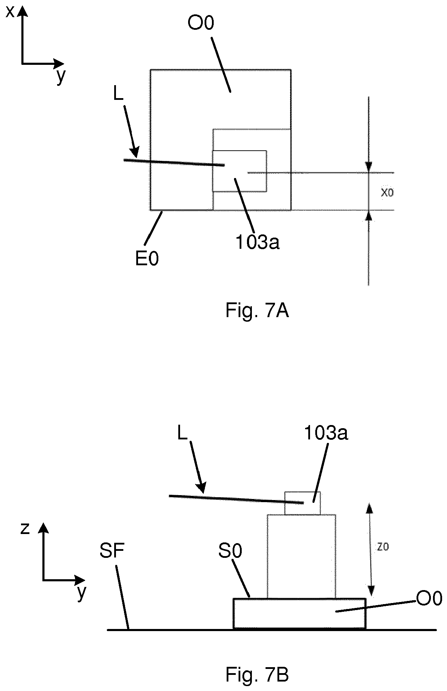

The first object O0 having the optical source 103a placed thereon is depicted in Figure 7A and 7B.

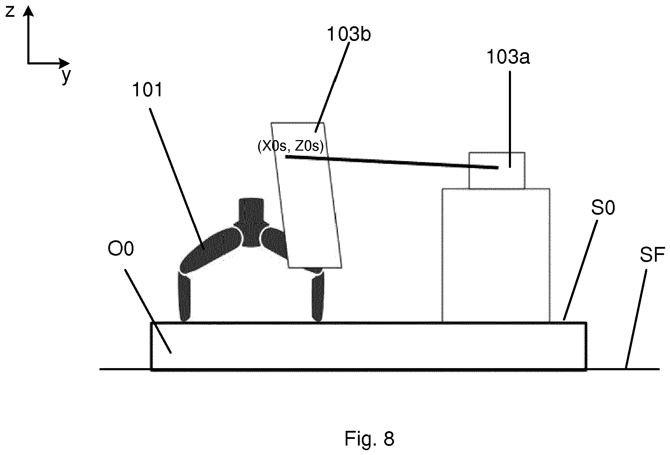

Figure 8 depicts a tool 101 comprising a first optical sensor being placed in the vicinity of the optical source 103a.

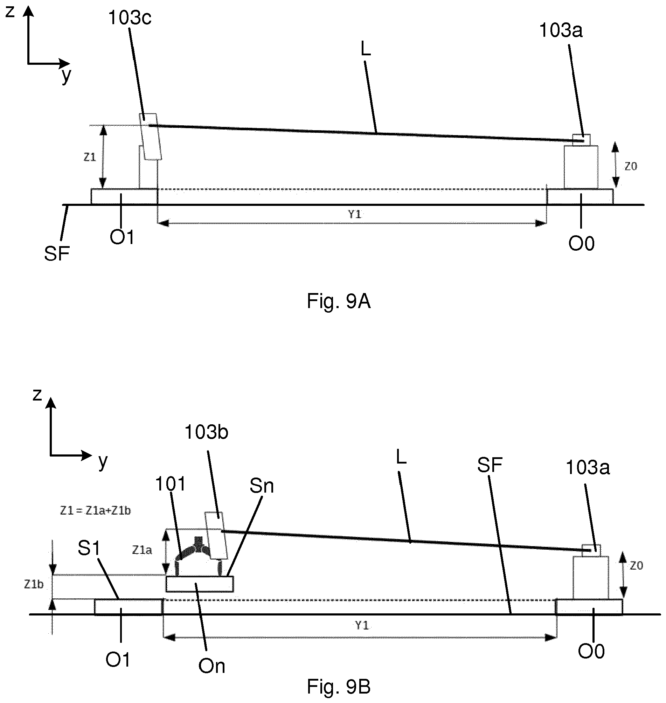

In Figure 9A, a second optical sensor 103c is placed on the second object O1 and the optical line L is emitted from the optical source 103a towards a point distanced from the top surface S1 by a distance Z1 in the z-direction.

In Figure 9B, a tool 101 comprising a first optical sensor 103b carries an object On. The emitted optical line L intersecting at a point distanced at a distance Z1 a in the z-direction from the top surface Sn of the object On.

The distance Z1b is the distance in the z-direction between the top surface S1 of the second object O1 already placed on the surface SF and the top surface Sn of the object On to be placed.

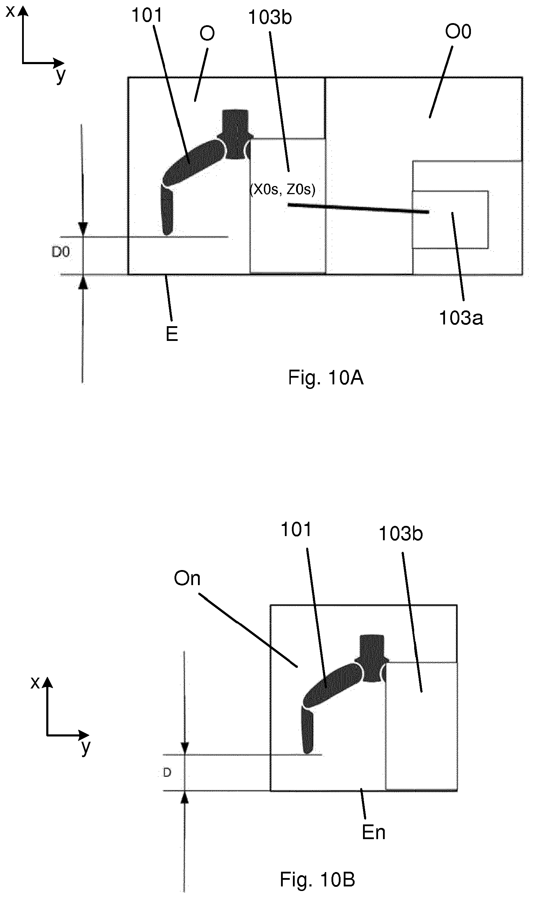

Figure 10A depicts a tool 101 carrying an object O aligning the first object O0 in both x- and y-directions. Note that the tool 101 is seen in a perspective from the side both in Figure 10A and 10B contrary to the objects in 10A and B being seen from above, looking down on the surface. At least a part of the tool 101 is distanced from the edge E of the object O by a distance D0 in the x-direction.

Figure 10B depicts the tool 101 carrying an object On to be placed and the corresponding at least part of the tool as in 10A is distanced from the edge En by the distance D in the x-direction.

The method and system schematically represented in Figures 1 and 2 will be further explained in relation to Figures 3-10 mentioned above.

For placing objects on a surface SF a first object O0 and a second object O1 are accurately placed in the x, y and z-directions on the surface SF. This may be performed manually, such as by a craftsman placing the objects or by some automated process. Preferably, the first and second objects O0, O1 represent the end objects of a row R1, R2, R3, Rn of objects to be laid. Every object inbetween the first and second object is hence placed in its position on the surface SF by the tool 101. All objects in between the first and second object, which serve as reference objects, are to be aligned with each other in the x, y and z-directions, hence along the line of sight YL.

The tool 101 may be configured to pick up an object, carry the object and place it on its position on the surface, and to release the object when in its accurate position. The tool may be designed in any appropriate manner depending on the circumstances such as what kind of objects are to be placed and the kind of surface to be covered by objects. Preferably, the tool is able to position an object in the three dimensions x, y, z as well as rotating the object around an axis in the z-direction and tilting the object in x and y directions.

For every object On to be placed by the tool 101, the desired position in x-direction and z-direction Xn, Zn is determined according to:

$$Xn = X0 + (X1-X0)*Yn/Y1 + (D-D0),$$

and

$$Zn = Z0 + (Z1-Z0)*Yn/Y1.$$

The distance X0, Z0 from the first object O0 to the optical line L may be determined by any appropriate method. For example, the distance Z0 from a top surface S0 of the object to the optical source 103a generating the optical line L may be measured automatically or manually. Correspondingly, the distance X0 from an edge E0 of the first object O0 to the optical source 103a may be measured automatically or manually. Alternatively, the distances X0 and/or Z0 may be given by a manufacturer of the optical source 103a. The optical source 103a may be placed on the first object of every row R1, R2, R3 ... RN to be placed on a surface. The same source may be used for every row and the distances X0, Z0 may be determined once, or once for every row. For example, the optical source 103a may be comprised by a fixture which may be placed in the same way on every first object O0 of each row so that the distances X0, Z0 are invariable.

The line of sight YL extends as earlier mentioned between the first and second objects O0, O1 in the y-direction and distances Y1, Yn between objects on the surface may be measured along the line of sight. As mentioned before, the distances along the y-direction may be determined by the measuring device 102.

For the tool to be able to accurately place the objects on the surface, the first optical sensor 103b needs to be calibrated. The first optical sensor 103b is able to provide the position where it is hit by the optical line L as output. The calibration may be performed by the tool, carrying an object or not, being placed on a height in the z-direction corresponding to the top surface S0 of the first object O0 as depicted in Figure 8. If possible, the tool may be placed on the surface of the first object O0. Also, the tool is placed in the accurate position in the x-direction. This may be performed manually or by the tool carrying an object which is aligned to the first object O0 as seen in Figure 10A. The tool 101 is positioned within a predetermined distance from the optical source 103a generating the optical line. Most preferably, the tool is positioned as close as possible to the source, but preferably within a distance of the size of an object to be placed on the surface, within 30 cm or within 10 cm.

As seen in Figure 5A and 5B, the optical line L may not be parallell with the line of sight YL. When positioning the first optical sensor 103b close to the optical source 103a, the deviation of the optical line from the direction along the line of sight may be neglected. The output generated by the first optical sensor 103b when accurately positioned in the x and z directions close to the optical source 103a serves as the zero point $X0_s$, $Z0_s$ for the sensor 103b, i.e. the point wherein an object carried by the tool 101 would be aligned with the first object O0 in the x and z directions. Thereby, when the first sensor 103b is being hit by the optical line at some point $X_S$, $Z_S$, the processing device 104 may determine, based on the output from the sensor 103b, the deviation in x and z direction from the position wherein an object is aligned with an object accurately placed on the surface.

The distances Z1 and X1 as seen in Figure 5 represent the initial reference distances by the second object O1, where a next object On is to be placed. Distances Z1 and X1 may be determined in alternative ways as illustrated in Figure 9A and 9B.

The first option is to use a second optical sensor 103c and place it on the second object O1 as shown in Figure 9A. The second optical sensor 103c being mounted in a way corresponding to how the first optical sensor 103b is mounted on the tool 101. The second optical sensor 103c is calibrated correspondingly to the calibration of the first optical sensor as earlier described, namely it is placed at a predetermined distance from the optical source 103a. Thus, when placed on the second object O1 the second optical sensor 103c may be used for determining the distances Z1, X1 where it is hit by the optical line L. Alternatively, the tool 101 may be placed on the surface S1 of the second object O1 and the first optical sensor 103b may be used in a similar way as described for sensor 103c above to determine distances X1 and Z1.

Alternatively, as shown in Figure 9B, the calibrated first optical sensor 103b is used for determining the distances X1 a, Z1 a, which are the distances from the top surface Sn and from the edge En to the point of impact of the optical line on the sensor 103b. The local deviation position sensing device 103d is used for determining distances X1b, Z1b which is the distances between the edges E1, En and the top surfaces S1, Sn respectively. Then, the distances X1, Z1 are determined by X1=X1 a+X1b and Z1=Z1a+Z1b. In this case, the deviation of the optical line over the length or width of an object may be negligible or may be compensated for by additional calculations given the size of the object. Using this alternative, the object carried by the tool should preferably be leveled horisontally, or if not the angle of tilt should be determined and it may thereby be compensated for in the determination of distances X1, Z1.

Consequently, by determining distances X0, Z0, X1 and Z1 according to above, a determination of the deviation between the optical line L and the line of sight YL may be performed. The differences X1-X0 and Z1-Z0 gives the deviation between the two lines L, YL at the second object (O1), that is at a distance Y1 from the first object O0.

Since the tool 101 may pick up objects, there is a risk that the tool is not positioned in the exact same position on every object. Therefore, there may be a need for taking a difference in holding position of the tool relatively an object On to be placed. This is illustrated in Figure 10A and 10B. During calibration, a distance D0 between an edge E of an object O carried by the tool 101 and at least a part of the tool is determined. When an object has been picked up by the tool 101, a distance D between the edge En and the at least part of the tool may be determined. For determining D0 and D the local deviation position sensing device 103d may be used. Alternatively, some additional position sensing device may be used.

By determining the distances X0, Z0, X1, Z1, Yn, Y1, D0 and D as described above, the processing device 104 may be able to determine the position Xn, Zn according to:

$$Xn = X0 + (X1-X0)*Yn/Y1 + (D-D0),$$

and

$$Zn = Z0 + (Z1-Z0)*Yn/Y1.$$

The control unit 105 may output signals in order to place the tool 101 according to these determined values Xn, Zn which results in an object On being placed in a row Rn of objects as seen in Figure 6A and 6B, aligned with the other objects along the x and z directions.

For aligning an object On to be placed in a row of objects in the y-direction, any appropriate method may be used. For example, the local deviation position sensing device 103d may be used for detecting at least an edge along the y-direction of an object On and comparing it to a corresponding edge of an object O1 already placed on the surface. A local deviation in the y-direction may be determined by the processing device 104 and signals may be sent from the control device 105 to accurately position the tool 101 in the y-direction. However, other possible methods for positioning objects may be used regarding positioning an object On in the y-direction depending on the circumstances.

Also, similarly to what is disclosed concerning the y-direction above, any appropriate method/s may be used for positioning an object in the additional degrees of freedom, namely rotation around z and tilt in x and y directions. For example, the tool 101 may comprise one or more tilt or rotation sensing devices, which may provide output to the processing device 104 and/or control device 105 for positioning the tool in the above mentioned degrees of freedom.

**Claims**

1. A method for placing at least one object (On) on a surface (SF), the type of object being a tile, brick, roof panel, wall panel or other surface layer material, the object being carried and positioned by a tool (101), the method comprising:

   determining (10) a deviation in at least one dimension between a line of sight (YL) between a first (O0) and a second (O1) object placed on the surface (SF), and an optical line (L) directed from the first (O0) towards the second (O1) object, the optical line (L) being generated by an optical source placed in the first object (O0) on the surface (SF), the line of sight (YL) being a line connecting the first (O0) and a second (O1) objects and parallel to the surface (SF)

   determining (20) a position (Xn, Zn) in at least one dimension for the tool based on the determined deviation, and

   positioning (30) the tool (101) so that the position (Xn, Zn) is achieved, thereby placing the object (On) on the surface (SF),

   whereby the first (O0) and the second (O1) object are placed on the surface (SF) manually or by an automated process, **characterised in that** the first (O0) and second (O1) objects are the same type of object as the object (On) to be placed by the tool (101),

   and **in that** the step (10) of determining the deviation comprises:

   determining a distance (Y1) between the first and second objects along the line of sight (YL),

   generating an optical line (L),

   determining a distance (XO, Z0) from at least an edge (E0) or a surface (SO) of the first object (O0) to the optical line (L), and determining a distance (X1, Z1) from at least a corresponding edge (E1) or a corresponding surface (S1) of the second object (O1) to the optical line (L),

   determining a distance (Yn), along the line of sight (YL), from the first object (O0) to a position where the object (On) carried by the tool (101) is to be placed, and

   determining the position (Xn, Zn) for the tool based at least on the distance (Y1) between the first (O0) and second (O1) objects along the line of sight (YL), the distance (XO, Z0) from at least an edge (E0) or a surface (SO) of the first object (O0) to the optical line (L), the distance (X1, Z1) from at least a corresponding edge (E1) or a corresponding surface (S1) of the second object (O1) to the optical line (L) and the distance (Yn) from the first object (O0) to the object (On) to be placed.

2. The method according to claim 1, further comprising, before the step of determining the distance (X1, Z1) from at least a corresponding edge (E1) or a corresponding surface (S1) of the second object (O1) to the optical line (L):
   calibrating a first optical sensor (103b) by:
   obtaining output from the first optical sensor (103b) when placed intersecting the optical line (L) within a predetermined distance from an optical source (103a) emitting the optical line (L).

3. The method according to claim 2, further comprising:

aligning an object (0) being carried by the tool (101) during calibration to the first object (O0) on the surface (SF), and

determining a distance (DO) between at least a part of the tool (101) and an edge (E) of the object (0) being carried by the tool during calibration.

4. The method according to claim 3, further comprising:

a. determining a distance (D) between the at least part of the tool (101) and an edge (En) of the object (On) to be placed, wherein the step of determining the position (Xn, Zn) of the tool (101) is based also on the distance (DO) between at least a part of the tool (101) and an edge (E) of an object (0) during calibration, and the distance (D) between the at least part of the tool (101) and an edge (En) of the object (On) to be placed.

5. The method according to any of claims 1-4, wherein determining the distance (X1, Z1) from at least a corresponding edge (E1) or a corresponding surface (S1) of the second object (O1) to the optical line (L), is based on output from the first optical sensor (103b) or from a second optical sensor (103c) analogously calibrated as the first optical sensor (103b).

6. A system (100) for placing at least one object (On) on a surface (SF), the type of object being a tile, brick, roof panel, wall panel or other surface layer material, the system comprising:

a tool (101) for carrying and placing the object, a measuring device (102) adapted to determine distances between objects (O0, O1, On) placed on the surface, at least one position sensing unit (103), comprising an optical source (103a) and a first optical sensor (103b), a processing device (104) adapted for receiving input from the position sensing unit (103) and the measuring device (102), and based on the received input determine a position (Xn, Zn) in at least one dimension for the tool (101), and a control unit (105) adapted for communicating with the processing device (104) and to control the tool (101), based on signals received from the processing device (104), to obtain the position (Xn, Zn) of the tool (101) for placing the object (On) on the surface (SF), **characterized in that** the position (Xn, Zn) is determined based on a deviation calculated using the steps:

determining a distance (XO, Z0) from at least an edge (E0) or a surface (SO) of a first object (O0) to the optical line (L), and determining a distance (X1, Z1) from at least a corresponding edge (E1) or a corresponding surface (S1) of a second object (O1) to the optical line (L), whereby the first and second objects are the same type of object as the object (On) to be placed by the tool, determining a distance (Yn), along the line of sight (YL), from the first object (O0) to a position where the object (On) carried by the tool (101) is to be placed, and determining the position (Xn, Zn) for the tool based at least on the distance (Y1) between the first (O0) and second (O1) objects along the line of sight (YL), the distance (XO, Z0) from at least an edge (E0) or a surface (SO) of the first object (O0) to the optical line (L), the distance (X1, Z1) from at least a corresponding edge (E1) or a corresponding surface (S1) of the second object (O1) to the optical line (L) and the distance (Yn) from the first object (O0) to the object (On) to be placed.

7. The system according to claim 6, wherein the position sensing unit (103) further comprises a second optical sensor (103c).

8. The system according to claim 6 or 7, wherein the first and/or the second optical sensors (103b, 103c) are calibrated optical sensors.

9. System according any of claims 6-8, wherein the position sensing unit (103) further comprises a local deviation position sensing device (103d) for sensing position deviation in at least one dimension between an object (On) carried by the tool and an object already present (O0, O1) on the surface.

10. System according to any of claims 6-9, wherein the first optical sensor (103b) is comprised in the tool (101) and the optical source (103a) is placed on the top surface (SO) of a first object (O0) on the surface (SF).

11. System according to any of claims 6-10, wherein the optical source (103a) is adapted for emitting an optical line (L) from the first object (O0) towards a second object (O1) on the surface (SF) and the first optical sensor (103b) is adapted for receiving the optical line (L).

**Patentansprüche**

1. Verfahren zum Platzieren mindestens eines Objekts (On) auf einer Oberfläche (SF), wobei die Art des Objekts eine Fliese, ein Stein, ein Dachpanel, ein Wandpanel oder ein anderes Oberflächenschichtmaterial ist, wobei das Objekt von einem Werkzeug (101) getragen und positioniert wird, wobei das Verfahren umfasst:

Bestimmen (10) einer Abweichung in mindestens einer Dimension zwischen einer Sichtlinie (YL) zwischen einem ersten (00) und einem zweiten (O1) Objekt, angeordnet auf der Oberfläche (SF), und einer optischen Linie (L), die von dem ersten (00) zu dem zweiten (O1) Objekt gerichtet ist, wobei die optische Linie (L) durch eine optische Quelle erzeugt wird, die in dem ersten Objekt (00) auf der Oberfläche (SF) angeordnet ist,
wobei die Sichtlinie (YL) eine Linie ist, die das erste (00) und ein zweites (O1) Objekt verbindet und parallel zu der Oberfläche (SF) ist,
Bestimmen (20) einer Position (Xn, Zn) in mindestens einer Dimension für das Werkzeug basierend auf der ermittelten Abweichung, und Positionieren (30) des Werkzeugs (101), so dass die Position (Xn, Zn) erreicht wird, wodurch das Objekt (On) auf der Oberfläche (SF) platziert wird, wobei das erste (00) und das zweite (O1) Objekt manuell oder durch einen automatisierten Prozess auf der Oberfläche (SF) platziert werden,
**dadurch gekennzeichnet, dass** das erste (00) und das zweite (O1) Objekt die gleiche Art von Objekt sind wie das durch das Werkzeug (101) zu platzierende Objekt (On), und dass der Schritt (10) des Bestimmens der Abweichung umfasst:

Bestimmen eines Abstands (Y1) zwischen dem ersten und dem zweiten Objekt entlang der Sichtlinie (YL),
Erzeugen einer optischen Linie (L),
Bestimmen eines Abstands (XO, Z0) von mindestens einer Kante (E0) oder einer Oberfläche (SO) des ersten Objekts (00) zu der optischen Linie (L), und
Bestimmen eines Abstands (X1, Z1) von mindestens einer entsprechenden Kante (E1) oder einer entsprechenden Oberfläche (S1) des zweiten Objekts (O1) zu der optischen Linie (L),

Bestimmen eines Abstands (Yn), entlang der Sichtlinie (YL), von dem ersten Objekt (00) zu einer Position, an der das von dem Werkzeug (101) getragene Objekt (On) zu platzieren ist, und
Bestimmen der Position (Xn, Zn) für das Werkzeug auf der Grundlage mindestens des Abstands (Y1) zwischen dem ersten (00) und dem zweiten (O1) Objekt entlang der Sichtlinie (YL), des Abstands (XO, Z0) von mindestens einer Kante (E0) oder
einer Oberfläche (SO) des ersten Objekts (00) zu der optischen Linie (L), den Abstand (X1, Z1) von mindestens einer entsprechenden Kante (E1) oder einer entsprechenden Oberfläche (S1) des zweiten Objekts (O1) zur optischen Linie (L) und den Abstand (Yn) vom ersten Objekt (00) zum zu platzierenden Objekt (On).

2. Verfahren nach Anspruch 1, ferner umfassend vor dem Schritt des Bestimmens des Abstands (X1, Z1) von mindestens einer entsprechenden Kante (E1) oder einer entsprechenden Oberfläche (S1) des zweiten Objekts (O1) zu der optischen Linie (L):
Kalibrieren eines ersten optischen Sensors (103b) durch:
Erhalten einer Ausgabe von dem ersten optischen Sensor (103b), wenn er so platziert ist, dass er die optische Linie (L) innerhalb eines vorbestimmten Abstands von einer optischen Quelle (103a), die die optische Linie (L) aussendet, schneidet.

3. Verfahren nach Anspruch 2, ferner umfassend:
Ausrichten eines Objekts (0), das von dem Werkzeug (101) getragen wird, während der Kalibrierung auf das erste Objekt (00) auf der Oberfläche (SF), und Bestimmen eines Abstands (DO) zwischen mindestens einem Teil des Werkzeugs (101) und einer Kante (E) des Objekts (0), das von dem Werkzeug während der Kalibrierung getragen wird.

4. Verfahren nach Anspruch 3, ferner umfassend:

a. Bestimmen eines Abstands (D) zwischen dem wenigstens einen Teil des Werkzeugs (101) und einer Kante (En) des zu platzierenden Objekts (On), wobei der Schritt des Bestimmens der Position (Xn, Zn) des Werkzeugs (101) auch auf dem Abstand (DO) zwischen wenigstens einem Teil des Werkzeugs (101) und einer Kante (E) eines Objekts (0) während der Kalibrierung und dem Abstand (D) zwischen dem wenigstens einen Teil des Werkzeugs (101) und einer Kante (En) des zu platzierenden Objekts (On) basiert.

5. Verfahren nach einem der Ansprüche 1-4, wobei die Bestimmung des Abstands (X1, Z1) von mindestens einer entsprechenden Kante (E1) oder einer entsprechenden Oberfläche (S1) des zweiten Objekts (O1) zur optischen Linie (L) auf der Ausgabe des ersten optischen Sensors (103b) oder eines zweiten optischen Sensors (103c), der analog zum ersten optischen Sensor (103b) kalibriert ist, basiert.
wobei die Art des Objekts ein Platte, ein Stein, eine Dachplatte, eine Wandplatte oder ein anderes Oberflächenschichtmaterial ist

**6.** System (100) zum Platzieren mindestens eines Objekts (On) auf einer Oberfläche (SF), wobei die Art des Objekts eine Fliese, ein Stein, ein Dachpanel, ein Wandpanel oder ein anderes Oberflächenschichtmaterial ist, wobei das System umfasst:

ein Werkzeug (101) zum Tragen und Platzieren des Objekts,
eine Messvorrichtung (102), die angepasst ist, um Abstände zwischen auf der Oberfläche platzierten Objekten (00, 01, On) zu bestimmen, mindestens eine Positionserfassungseinheit (103), die eine optische Quelle (103a) und einen ersten optischen Sensor (103b) umfasst, eine Verarbeitungsvorrichtung (104), die angepasst ist, um eine Eingabe von der Positionserfassungseinheit (103) und der Messvorrichtung (102) zu empfangen und basierend auf der empfangenen Eingabe eine Position (Xn, Zn) in mindestens einer Dimension für das Werkzeug (101) zu bestimmen, und eine Steuereinheit (105), die angepasst ist, um mit der Verarbeitungsvorrichtung (104) zu kommunizieren und das Werkzeug (101) basierend auf von der Verarbeitungsvorrichtung (104) empfangenen Signalen zu steuern, um die Position (Xn, Zn) des Werkzeugs (101) zum Platzieren des Objekts (On) auf der Oberfläche (SF) zu erhalten, **dadurch gekennzeichnet, dass** die Position (Xn, Zn) basierend auf einer Abweichung bestimmt wird, die berechnet wird unter Verwendung der Schritte:

Bestimmen eines Abstands (XO, Z0) von mindestens einer Kante (E0) oder einer Oberfläche (SO) eines ersten Objekts (00) zu der optischen Linie (L), und
Bestimmen eines Abstands (X1, Z1) von mindestens einer entsprechenden Kante (E1) oder einer entsprechenden Oberfläche (S1) eines zweiten Objekts (O1) zu der optischen Linie (L), wobei das erste und das zweite Objekt die gleiche Art von Objekt sind wie das durch das Werkzeug zu platzierende Objekt (On),

Bestimmen eines Abstands (Yn), entlang der Sichtlinie (YL), von dem ersten Objekt (00) zu einer Position, an der das durch das Werkzeug (101) getragene Objekt (On) platziert werden soll, und
Bestimmen der Position (Xn, Zn) für das Werkzeug auf der Grundlage mindestens des Abstands (Y1) zwischen dem ersten (00) und dem zweiten (O1) Objekt entlang der Sichtlinie (YL), des Abstands (XO, Z0) von mindestens einer Kante (E0) oder einer Oberfläche (SO) des ersten Objekts (00) zu der optischen Linie (L), den Abstand (X1, Z1) von mindestens einer entsprechenden Kante (E1) oder einer entsprechenden Oberfläche (S1) des zweiten Objekts (O1) zu der optischen Linie (L) und den Abstand (Yn) von dem ersten Objekt (00) zu dem zu platzierenden Objekt (On).

**7.** System nach Anspruch 6, wobei die Positionserfassungseinheit (103) ferner einen zweiten optischen Sensor (103c) umfasst.

**8.** System nach Anspruch 6 oder 7, wobei der erste und/oder der zweite optische Sensor (103b, 103c) kalibrierte optische Sensoren sind.

**9.** System nach einem der Ansprüche 6 bis 8, wobei die Positionserfassungseinheit (103) ferner eine lokale Abweichungspositionserfassungsvorrichtung (103d) zum Erfassen einer Positionsabweichung in mindestens einer Dimension zwischen einem von dem Werkzeug getragenen Objekt (On) und einem bereits auf der Oberfläche vorhandenen Objekt (00, 01) umfasst.

**10.** System nach einem der Ansprüche 6-9, wobei der erste optische Sensor (103b) in dem Werkzeug (101) enthalten ist und die optische Quelle (103a) auf der oberen Oberfläche (SO) eines ersten Objekts (00) auf der Oberfläche (SF) angeordnet ist.

**11.** System nach einem der Ansprüche 6-10, wobei die optische Quelle (103a) zum Aussenden einer optischen Linie (L) von dem ersten Objekt (00) in Richtung eines zweiten Objekts (O1) auf der Oberfläche (SF) ausgebildet ist und der erste optische Sensor (103b) zum Empfangen der optischen Linie (L) ausgebildet ist.

**Revendications**

**1.** Procédé de mise en place d'au moins un objet (On) sur une surface (SF), le type d'objet étant une tuile, une brique, un pan de toiture, un panneau mural ou un autre matériau de couche de surface, l'objet étant porté et positionné par un outil (101), le procédé comprenant :

la détermination (10) d'un écart dans au moins une dimension entre une ligne de visée (YL) entre un premier (O0) et un second (O1) objet mis en place sur la surface (SF), et une ligne optique (L) dirigée depuis le premier (O0) vers le second (O1) objet, la ligne optique (L) étant générée par une source optique mise en place dans le premier objet (O0) sur la surface (SF), la ligne de visée (YL) étant une ligne reliant le premier (O0) et un second (O1) objet et parallèle à la surface (SF)

la détermination (20) d'une position (Xn, Zn) dans au moins une dimension pour l'outil sur la base de l'écart déterminé, et

le positionnement (30) de l'outil (101) de sorte que la position (Xn, Zn) soit atteinte, mettant ainsi en place l'objet (On) sur la surface (SF), moyennant quoi le premier (O0) et le second (O1) objet sont mis en place sur la surface (SF) manuellement ou par un procédé automatisé, **caractérisé en ce que** les premier (O0) et second (O1) objets sont le même type d'objet que l'objet (On) devant être mis en place par l'outil (101), et **en ce que** l'étape (10) consistant à déterminer l'écart comprend :

la détermination d'une distance (Y1) entre les premier et second objets le long de la ligne de visée (YL),
la génération d'une ligne optique (L),
la détermination d'une distance (XO, Z0) depuis au moins un bord (E0) ou une surface (SO) du premier objet (O0) jusqu'à la ligne optique (L), et
la détermination d'une distance (X1, Z1) depuis au moins un bord (E1) correspondant ou une surface (S1) correspondante du second objet (O1) jusqu'à la ligne optique (L),

la détermination d'une distance (Yn), le long de la ligne de visée (YL), depuis le premier objet (O0) jusqu'à une position où l'objet (On) porté par l'outil (101) doit être mis en place, et

la détermination de la position (Xn, Zn) pour l'outil au moins sur la base de la distance (Y1) entre les premier (O0) et second (O1) objets le long de la ligne de visée (YL), la distance (XO, Z0) depuis au moins un bord (E0) ou une surface (SO) du premier objet (O0) jusqu'à la ligne optique (L), la distance (X1, Z1) depuis au moins un bord (E1) correspondant ou une surface (S1) correspondante du second objet (O1) jusqu'à la ligne optique (L) et la distance (Yn) depuis le premier objet (O0) jusqu'à l'objet (On) devant être mis en place.

2. Procédé selon la revendication 1, comprenant en outre, avant l'étape consistant à déterminer la distance (X1, Z1) depuis au moins un bord (E1) correspondant ou une surface (S1) correspondante du second objet (O1) jusqu'à la ligne optique (L) :
l'étalonnage d'un premier capteur optique (103b) en :
obtenant une sortie depuis le premier capteur optique (103b) lorsqu'il est mis en place croisant la ligne optique (L) dans une distance prédéterminée depuis une source optique (103a) émettant la ligne optique (L).

3. Procédé selon la revendication 2, comprenant en outre :

l'alignement d'un objet (0) qui est porté par l'outil (101) durant un étalonnage sur le premier objet (O0) sur la surface (SF), et
la détermination d'une distance (DO) entre au moins une partie de l'outil (101) et un bord (E) de l'objet (0) qui est porté par l'outil durant l'étalonnage.

4. Procédé selon la revendication 3, comprenant en outre :

a. la détermination d'une distance (D) entre l'au moins une partie de l'outil (101) et un bord (En) de l'objet (On) devant être mis en place, dans lequel l'étape consistant à déterminer la position (Xn, Zn) de l'outil (101) est basée également sur la distance (DO) entre au moins une partie de l'outil (101) et un bord (E) d'un objet (0) durant un étalonnage, et la distance (D) entre l'au moins une partie de l'outil (101) et un bord (En) de l'objet (On) devant être mis en place.

5. Procédé selon l'une quelconque des revendications 1 à 4, dans lequel la détermination de la distance (X1, Z1) depuis au moins un bord (E1) correspondant ou une surface (S1) correspondante du second objet (O1) jusqu'à la ligne optique (L) est basée sur une sortie depuis le premier capteur optique (103b) ou depuis un second capteur optique (103c) étalonné de manière analogue au premier capteur optique (103b).

6. Système (100) de mise en place d'au moins un objet (On) sur une surface (SF), le type d'objet étant une tuile, une brique, un pan de toiture, un panneau mural ou un autre matériau de couche de surface, le système comprenant :

un outil (101) pour porter et mettre en place l'objet,
un dispositif de mesure (102) adapté pour déterminer des distances entre des objets (O0, O1, On) mis en place sur la surface,
au moins une unité de détection de position (103), comprenant une source optique (103a) et un premier capteur optique (103b),
un dispositif de traitement (104) adapté pour recevoir une entrée depuis l'unité de détection de position (103) et le dispositif de mesure (102), et sur la base de l'entrée reçue déterminer une position (Xn, Zn) dans au moins une dimension pour l'outil (101), et
une unité de commande (105) adaptée pour communiquer avec le dispositif de traitement (104) et pour commander l'outil (101), sur la base de signaux reçus depuis le dispositif de traitement (104), pour obtenir la position (Xn, Zn) de l'outil (101) pour mettre en place l'objet (On) sur la surface (SF),

**caractérisé en ce que** la position (Xn, Zn) est déterminée sur la base d'un écart calculé en utilisant les étapes de :

> détermination d'une distance (XO, Z0) depuis au moins un bord (E0) ou une surface (SO) d'un premier objet (O0) jusqu'à la ligne optique (L), et
> détermination d'une distance (X1, Z1) depuis au moins un bord (E1) correspondant ou une surface (S1) correspondante d'un second objet (O1) jusqu'à la ligne optique (L), moyennant quoi les premier et second objets sont le même type d'objet que l'objet (On) devant être mis en place par l'outil,
>
> détermination d'une distance (Yn), le long de la ligne de visée (YL), depuis le premier objet (O0) jusqu'à une position où l'objet (On) porté par l'outil (101) doit être mis en place, et
> détermination de la position (Xn, Zn) pour l'outil au moins sur la base de la distance (Y1) entre les premier (O0) et second (O1) objets le long de la ligne de visée (YL), la distance (XO, Z0) depuis au moins un bord (E0) ou une surface (SO) du premier objet (O0) jusqu'à la ligne optique (L), la distance (X1, Z1) depuis au moins un bord (E1) correspondant ou une surface (S1) correspondante du second objet (O1) jusqu'à la ligne optique (L) et la distance (Yn) depuis le premier objet (O0) jusqu'à l'objet (On) devant être mis en place.

7. Système selon la revendication 6, dans lequel l'unité de détection de position (103) comprend en outre un second capteur optique (103c).

8. Système selon la revendication 6 ou 7, dans lequel le premier et/ou le second capteur optique (103b, 103c) sont des capteurs optiques étalonnés.

9. Système selon l'une quelconque des revendications 6 à 8, dans lequel l'unité de détection de position (103) comprend en outre un dispositif de détection de position d'écart local (103d) pour détecter un écart de position dans au moins une dimension entre un objet (On) porté par l'outil et un objet (O0, O1) déjà présent sur la surface.

10. Système selon l'une quelconque des revendications 6 à 9, dans lequel le premier capteur optique (103b) est compris dans l'outil (101) et la source optique (103a) est mise en place sur la surface (SO) supérieure d'un premier objet (O0) sur la surface (SF).

11. Système selon l'une quelconque des revendications 6 à 10, dans lequel la source optique (103a) est adaptée pour émettre une ligne optique (L) depuis le premier objet (O0) vers un second objet (O1) sur la surface (SF) et le premier capteur optique (103b) est adapté pour recevoir la ligne optique (L).

Fig. 1

100

101

102

103

103a    103b

103

103c    103d

104

105

Fig. 2

Fig. 3

Fig. 4A

Fig. 4B

Fig. 5A

Fig. 5B

X

y

On

O0

L

Rn

O1

Xn

En

103b

Yn

X0

103a

Fig. 6A

z

y

103b

101

Sn

On

SF

O1

Zn

L

103a

Z0

Yn

O0

Fig. 6B

X

y

O0

L

E0

103a

X0

Fig. 7A

L

103a

z

y

SF

S0

Z0

O0

Fig. 7B

Fig. 8

Z

103c                                                              L                                      103a

Z1

Z0

SF      O1                                                                                              O0

Fig. 9A

Z

103b

Z1 = Z1a+Z1b      101      Sn                          L            SF        103a

S1

Z1a                                                                              Z0

Z1b

O1            On                                        Y1                        O0

Fig. 9B

x

y

101          O          103b          O0

(X0s, Z0s)

D0

103a

E

Fig. 10A

On          101          103b

x

y

D

En

Fig. 10B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150336272 A1
- EP 2907938 A1
- FR 2919322 A1
- WO 2015193883 A1